# DEMANDE DE BREVET EUROPEEN

(11) **EP 4 819 423 A1**
(43) Date de publication de la demande: **07.10.2026**
(21) Numéro de dépôt: 25305484.5
(22) Date de dépôt: 01.04.2025
(51) Int. Cl.: H02H 3/08, H02H 3/10

(54) **CIRCUIT DE PROTECTION D'UN SYSTÈME D ALIMENTATION ÉLECTRIQUE TRIPHASÉ ET CIRCUIT ÉLECTRIQUE**

(71) Demandeur: SCHNEIDER ELECTRIC INDUSTRIES SAS, 92500 Rueil-Malmaison (FR)
(72) Inventeur: BONJEAN, Eloise, 38260 LE MOTTIER (FR)
(74) Mandataire: Plasseraud IP

(57) **Abrégé**

L'invention concerne un circuit de protection (2) comprenant :
- un premier, un deuxième et un troisième transformateurs de courant couplés respectivement à une première ligne de phase, une deuxième ligne de phase et une troisième ligne de phase,
- un transformateur de courant sommateur (16) ayant un côté primaire comprenant une première entrée (20) connectée au premier transformateur de courant, une première prise intermédiaire (22) connectée au deuxième transformateur de courant, une deuxième prise intermédiaire (24) connectée au troisième transformateur de courant, et une deuxième entrée (26) connectée au premier transformateur de courant, au deuxième transformateur de courant et au troisième transformateur de courant. Le circuit de protection comporte un premier thermofusible (18) connecté entre la première entrée du transformateur de courant sommateur et le premier transformateur de courant, et un deuxième thermofusible (28) connecté entre le troisième transformateur de courant et la deuxième prise intermédiaire.

## Description

### Domaine technique

La présente invention concerne un circuit de protection pour un système d'alimentation électrique moyenne-tension utilisant un actionneur de déclenchement. L'invention concerne également un circuit électrique comprenant un tel circuit de protection.

### Technique antérieure

Il est connu du document EP 2 079 140 un circuit de protection comprenant trois transformateurs de courant couplés chacun directement à une ligne de phase et trois thermofusibles connectés entre les bornes de sortie du transformateur de courant. Toutefois, ce circuit de protection comprend des transformateurs de courant couplés aux lignes de phase ayant un volume important. Il est souhaité, pour réduire les coûts, d'utiliser des transformateurs de courant basse puissance peu volumineux. Ces transformateurs ne peuvent pas délivrer une puissance aussi élevée, ce qui fait obstacle à leur utilisation avec les chaînes des composants connues des actionneurs de déclenchement.

Il est également connu d'avoir deux électro-aimants ou plus dans la chaîne des composants de l'actionneur de déclenchement pour déclencher la coupure du système d'alimentation, ce qui prend de la place au sein de ces composants. Enfin, le nombre de variantes de thermofusible nécessaires pour couvrir la gamme des caractéristiques de déclenchement souhaitée par les utilisateurs est généralement élevé.

Un premier but de la présente invention est de proposer un circuit de protection compact.

Un deuxième but de la présente invention est de proposer un circuit de protection ayant faible coût de fabrication et présentant une faible consommation électrique. Un troisième but de la présente invention est de proposer un circuit de protection fiable et robuste.

Un quatrième but de la présente invention est de proposer un circuit de protection dans lequel le seuil de déclenchement peut facilement être adaptée aux différents besoins du client, par le client lui-même.

### Résumé

La présente invention a pour objet un circuit de protection pour un système d'alimentation électrique moyenne-tension, le système d'alimentation électrique comprenant une première phase, une deuxième phase et une troisième phase ; le circuit de protection comprenant :
- un premier transformateur de courant couplé à la première ligne de phase,
- un deuxième transformateur de courant couplé à la deuxième ligne de phase,
- un troisième transformateur de courant couplé à la troisième ligne de phase,
- un transformateur de courant sommateur ayant un côté primaire et un côté secondaire, le côté primaire comprenant une première entrée connectée au premier transformateur de courant, une première prise intermédiaire connectée au deuxième transformateur de courant, une deuxième prise intermédiaire connectée au troisième transformateur de courant, et au moins une deuxième entrée connectée au premier transformateur de courant, au deuxième transformateur de courant et au troisième transformateur de courant, caractérisé en ce que le circuit de protection comporte un premier thermofusible connecté entre l'entrée du transformateur de courant sommateur et le premier transformateur de courant, et un deuxième thermofusible connecté entre le troisième transformateur de courant et la deuxième prise intermédiaire.

Les caractéristiques exposées dans les paragraphes suivants peuvent, optionnellement, être mises en œuvre. Elles peuvent être mises en œuvre indépendamment les unes des autres ou en combinaison les unes avec les autres :
- La deuxième prise intermédiaire est agencée entre la première prise intermédiaire et la deuxième entrée.
- Le circuit de protection comporte en outre un redresseur connecté au secondaire du transformateur de courant sommateur.
- Le redresseur est un pont de diodes.
- Le circuit de protection comporte un actionneur de déclenchement connecté en sortie du redresseur.
- Le premier transformateur de courant, le deuxième transformateur de courant et le troisième transformateur de courant sont des transformateurs de type à traversée.
- Le premier thermofusible et le deuxième thermofusible sont choisis parmi des thermofusibles ayant un courant nominal choisi parmi 3 Ampères, 5 Ampères et 7.5 Ampères.

L'invention concerne également un circuit électrique comprenant :
- un système d'alimentation électrique moyenne-tension, le système d'alimentation électrique comprenant une première phase, une deuxième phase et une troisième phase ;
- un disjoncteur configurer pour couper le courant sur au moins une ligne de phase parmi la première phase, la deuxième phase et la troisième phase ;
- un circuit de protection conforme aux caractéristiques mentionnées ci-dessus.

### Brève description des dessins

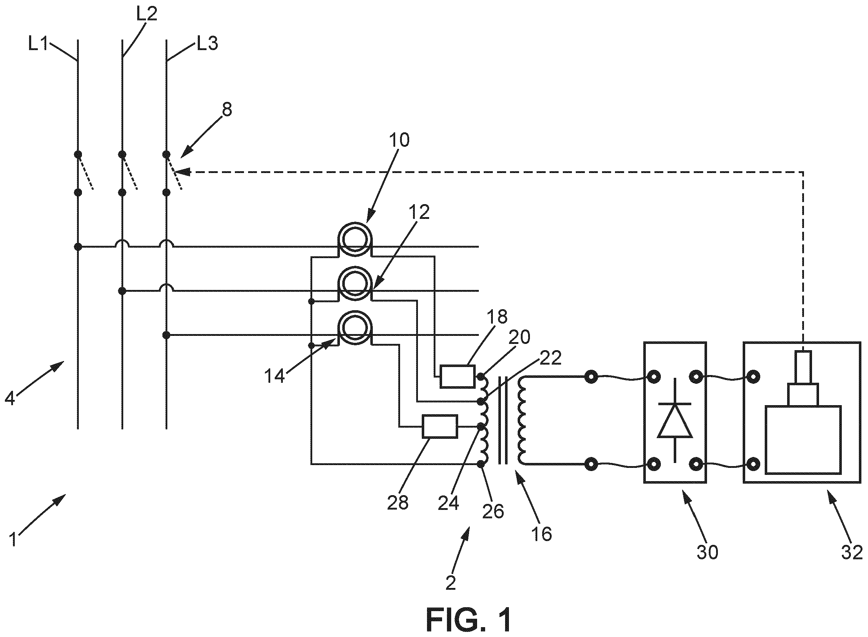

D'autres particularités et avantages de la présente divulgation apparaîtront dans la description ci-après d'exemples de réalisation non limitatifs, en référence à la figure 1.
[Fig. 1] est une vue schématique d'un circuit électrique selon l'invention.

### Description des modes de réalisation

Dans la présente description, les termes « amont » et « aval » sont à interpréter en fonction du sens du courant dans le circuit de protection.

L'invention concerne un circuit électrique 1 et un circuit de protection 2. En référence à l'unique figure, le circuit électrique 1 comprend un système d'alimentation électrique 4, un circuit de protection 2 couplé au système d'alimentation électrique 4 et un disjoncteur 8 configuré pour couper le courant sur le système d'alimentation électrique 4.

Le système d'alimentation électrique 4 est un système d'alimentation électrique à moyenne-tension. Le terme « moyenne-tension » fait référence à des tensions supérieures à 1 kV et inférieures à 12 kV. Le système d'alimentation électrique 4 est configuré pour transporter un courant alternatif triphasé. A cet effet, le système d'alimentation électrique 4 possède une première ligne de phase L1, une deuxième ligne de phase L2 et une troisième ligne de phase L3.

Le disjoncteur 8 est connecté aux trois lignes de phase en amont du circuit de protection 2. Dans le mode de réalisation illustré sur la figure et nullement limitatif, le disjoncteur 8 comprend, par exemple, trois interrupteurs connectés chacun à une ligne de phase.

Le circuit de protection 2 est connecté en aval du système d'alimentation électrique 4. Le circuit de protection 2 comprend un premier transformateur de courant 10, un deuxième transformateur de courant 12, un troisième transformateur de courant 14.

De préférence, ces transformateurs de courant 10,12,13 sont des transformateurs de type à traversée (en anglais « bushing transformer »). Ces transformateurs de courant présentent un côté moyenne-tension, dit côté primaire et un côté basse tension, dit côté secondaire. Le côté primaire du premier transformateur de courant 10 est couplé à la première ligne de phase L1. Le côté primaire du deuxième transformateur de courant 12 est couplé à la deuxième ligne de phase L2. Le côté primaire du troisième transformateur de courant 14 est couplé à la troisième ligne de phase L3.

Le circuit de protection 2 comprend en outre un transformateur de courant sommateur 16 et un premier thermofusible 18.

Le transformateur de courant sommateur 16 présente un côté primaire et un côté secondaire. Le côté primaire du transformateur de courant sommateur 16 comprend une première entrée 20, une première prise intermédiaire 22, une deuxième prise intermédiaire 24, et une deuxième entrée 26. Le côté secondaire du transformateur de courant sommateur 16 comprend ici une sortie. En variante, le côté secondaire du transformateur de courant sommateur 16 comprend plusieurs sorties. Le redresseur 30 est connecté à l'une ou l'autre des sorties en fonction du rapport du transformation des transformateurs de traversée afin de conserver le seuil de défaut de terre à 30 Ampères ce qui équivaut à une fraction du courant nominal sélectionné du transformateur de traversée. Par exemple, la fraction est de 15% d'un courant nominal de 200 Ampères d'un transformateur de traversée ou 30 % d'un courant nominal de 100 Ampères ou encore 60% d'un courant nominal de 50 Ampères .

Le premier thermofusible 18 est connecté entre la première entrée 20 du transformateur de courant sommateur 16 et une entrée du secondaire du premier transformateur de courant 10. L'autre entrée du secondaire du premier transformateur de courant 10 est connectée à la deuxième entrée 26 du transformateur de courant sommateur 16.

Une entrée du secondaire du deuxième transformateur de courant 12 est connectée à la première prise intermédiaire 22. L'autre entrée du secondaire du deuxième transformateur de courant 12 est connectée à la deuxième entrée 26.

Le circuit de protection 2 comprend en outre un deuxième thermofusible 28. Le deuxième thermofusible 28 est connecté à la deuxième prise intermédiaire 24 et à une entrée du secondaire du troisième transformateur de courant 14. L'autre entrée du secondaire du troisième transformateur de courant 14 est connectée à la deuxième entrée 26 du transformateur de courant sommateur 16.

Avantageusement, l'utilisateur peut facilement adapter le seuil de déclenchement de l'actionneur de déclenchement en changeant de catégories de thermofusible c'est-à-dire en choisissant un thermofusible parmi des thermofusibles ayant des seuils de déclenchement différents.

Le circuit de protection 2 comprend un redresseur 30 de courant connecté aux deux sorties du secondaire du transformateur de courant sommateur 16.

De préférence, le redresseur 30 comprend un pont de diodes, et de préférence un pont de Graetz.

De préférence, le circuit de protection 2 comprend un actionneur de déclenchement 32. L'actionneur de déclenchement 32 est propre à déclencher le disjoncteur 8.

L'actionneur de déclenchement 32 est, par exemple, un actionneur de déclenchement à électroaimant.

De préférence, le premier thermofusible 18 et le deuxième thermofusible 28 sont choisis parmi des fusibles ayant un courant nominal choisi parmi 3 Ampères, 5 Ampères et 7.5 Ampères.

Avantageusement, le seuil de tolérance des thermofusibles est choisi de manière à permettre le déclenchement de l'actionneur de déclenchement pour le courant de ligne voulu.

En fonctionnement, le courant au secondaire du transformateur de courant sommateur 16 représente la somme vectorielle des courants entrant dans le primaire du transformateur de courant sommateur.

Lorsqu'il n'y a pas de défaut, la somme des courants est nulle car les courants de phase sont équilibrés et de direction se compensant. Le courant en sortie du secondaire du transformateur de courant sommateur 16 est sensiblement nulle.

La protection agit lorsqu'un courant apparait au secondaire du transformateur de courant sommateur 16. Le courant est redressé par le redresseur 30. Le courant redressé est transmis à l'actionneur de déclenchement 32. L'actionneur de déclenchement commande le disjoncteur 8 afin qu'il coupe le circuit d'alimentation 4.

Deux cas peuvent se produire :
- le courant de phase (court-circuit, surcharge) est supérieur au seuil qui fait fondre un le premier thermofusible 18 ou le deuxième thermofusible 28. Le courant secondaire résultant de la somme des courants primaires du transformateur de courant sommateur est suffisamment grand (il manque une phase) pour provoquer le déclenchement de l'actionneur
- le défaut de terre, une partie du courant d'une ligne de phase fuit vers la terre, il y a un déséquilibre entre les courants traversant la première phase L1, la deuxième phase L2 et la troisième phase L3. Ce courant de déséquilibre est supérieur au seuil fixé (primaire et par couplage secondaire du transformateur de courant sommateur) pour provoquer le déclenchement de l'actionneur. Ce seuil est avantageusement correspondant à un courant primaire (bushing TC) de 30A.

Avantageusement, le transformateur de courant sommateur 16 est réalisé par un bobinage torique. L'enroulement est fait autour d'un noyau en forme d'anneau. Les fuites magnétiques sont faibles. Le rendement est élevé.

## Revendications

1. Circuit de protection (2) pour un système d'alimentation électrique (4) moyenne-tension, le système d'alimentation électrique comprenant une première phase (L1), une deuxième phase (L2) et une troisième phase (L3); le circuit de protection (2) comprenant :
- un premier transformateur de courant (10) couplé à la première ligne de phase (L1),
- un deuxième transformateur de courant (12) couplé à la deuxième ligne de phase (L2),
- un troisième transformateur de courant (14) couplé à la troisième ligne de phase (L3),
- un transformateur de courant sommateur (16) ayant un côté primaire et un côté secondaire, le côté primaire comprenant une première entrée (20) connectée au premier transformateur de courant (10), une première prise intermédiaire (22) connectée au deuxième transformateur de courant (12), une deuxième prise intermédiaire (24) connectée au troisième transformateur de courant (14), et au moins une deuxième entrée (26) connectée au premier transformateur de courant (10), au deuxième transformateur de courant (12) et au troisième transformateur de courant (14), **caractérisé en ce que** le circuit de protection (2) comporte un premier thermofusible (18) connecté entre la première entrée (20) du transformateur de courant sommateur (16) et le premier transformateur de courant (10), et un deuxième thermofusible (28) connecté entre la deuxième prise intermédiaire (24) et le troisième transformateur de courant (14).

2. Circuit de protection (2) selon la revendication 1, dans lequel la deuxième prise intermédiaire (24) est agencée entre la première prise intermédiaire (22) et la deuxième entrée (26).

3. Circuit de protection (2) selon l'une quelconque des revendications 1 et 2, qui comporte en outre un redresseur (30) connecté au secondaire du transformateur de courant sommateur.

4. Circuit de protection (2) selon la revendication 3, dans lequel le redresseur (30) est un pont de diodes.

5. Circuit de protection (2) selon l'une quelconque des revendications 3 et 4, qui comporte un actionneur de déclenchement (32) connecté en sortie du redresseur.

6. Circuit de protection (2) selon l'une quelconque des revendications 1 à 5, dans lequel le premier transformateur de courant (10), le deuxième transformateur de courant (12) et le troisième transformateur de courant (14) sont des transformateurs de type à traversée.

7. Circuit de protection (2) selon l'une quelconque des revendications 1 à 6, dans lequel le premier thermofusible (18) et le deuxième thermofusible (28) sont choisis parmi des thermofusibles ayant un courant nominal choisi parmi 3 Ampères, 5 Ampères et 7.5 Ampères.

8. Circuit électrique (1) comprenant :
- un système d'alimentation électrique moyenne-tension (4), le système d'alimentation électrique comprenant une première phase (L1), une deuxième phase (L2) et une troisième phase (L3) ;
- un disjoncteur (8) configuré pour couper le courant sur au moins une ligne de phase parmi la première phase (L1), la deuxième phase (L2) et la troisième phase (L3) ;
- un circuit de protection (2) conforme à l'une quelconque des revendications 1 à 7.
